# EUROPÄISCHE PATENTSCHRIFT

(11) **EP 3 426 815 B1**
(45) Veröffentlichungstag und Bekanntmachung des Hinweises auf die Patenterteilung: **04.10.2023**
(21) Anmeldenummer: 17712408.8
(22) Anmeldetag: 03.02.2017
(51) Int. Cl.: C23C 4/06, C23C 4/08, C23C 24/04, C23C 28/02, C23C 30/00, C23C 4/129, C23C 4/073, C23C 4/134, F01D 5/00, C23C 28/00

(54) **HAFTVERMITTLERSCHICHT ZUR ANBINDUNG EINER HOCHTEMPERATURSCHUTZSCHICHT AUF EINEM SUBSTRAT, SOWIE VERFAHREN ZUR HERSTELLUNG DERSELBEN**
ADHESION PROMOTER LAYER FOR JOINING A HIGH-TEMPERATURE PROTECTION LAYER TO A SUBSTRATE, AND METHOD FOR PRODUCING SAME
COUCHE D'ADHÉSIF DESTINÉE À SE LIER À UNE COUCHE DE PROTECTION À HAUTE TEMPÉRATURE SUR UN SUBSTRAT ET PROCÉDÉ DE PRODUCTION

(30) Priorität: 07.03.2016 DE 102016002630
(43) Veröffentlichungstag der Anmeldung: 16.01.2019
(73) Patentinhaber: Forschungszentrum Jülich GmbH, 52425 Jülich (DE)
(72) Erfinder: VAßEN, Robert, 52134 Herzogenrath (DE); BERGHOLZ, Jan, 52428 Jülich (DE); MACK, Daniel Emil, 50931 Köln (DE); QUADAKKERS, Willem J., 6363 EG Wijnandsrade (NL)
(86) Internationale Anmeldenummer: PCT/DE2017/000017
(87) Internationale Veröffentlichungsnummer: WO 2017/152891

(56) Entgegenhaltungen:
- EP-A1- 0 933 448
- WO-A1-2005/038075
- WO-A1-2006/103127
- US-A- 4 034 142
- US-A- 5 863 668
- US-B2- 7 172 820

## Beschreibung

Die Erfindung betrifft eine neue Haftvermittlerschicht zur Anbindung einer Hochtemperatur-schutzschicht wie beispielsweise einer Wärmedämmschicht oder einer umgebungsstabilen (Themal-) Schutzschicht auf einem Substrat, sowie ein Verfahren zur Herstellung derselben.

### Stand der Technik

Unter Wärmedämmschichten (thermal barrier coating, TBC) werden Schutzschichten auf temperaturbelasteten Bauteilen verstanden, die die Werkstofftemperatur der Bauteile bei Hochtemperaturanwendungen absenken sollen. Wärmedämmschichten weisen je nach Bedarf Schichtdicken im Bereich von wenigen Zehntelmillimetern bis hin zu Millimetern auf.

Wärmedämmschichten helfen so, die Festigkeit des Materials des Bauteils auch bei sehr hohen Temperaturen zu schützen. So können beispielsweise Turbinenschaufelwerkstoffe bei Abgastemperaturen über 1400 °C eingesetzt werden, weil durch eine Wärmedämmschicht die Temperatur des Materials auf unter 1100 °C gesenkt werden kann, bei der der Werkstoff noch eine genügend hohe Festigkeit besitzt.

Wärmedämmschichten sind in der Regel ein sehr effektiver Schutz gegen die erreichten extremen Heißgas-Temperaturen, weitere Hochtemperaturschutzschichten schützten temperaturbelastete Bauteile in aggressiven Umgebungen, darüber hinaus auch gegen Oxidation, Korrosion oder auch Erosion.

Das Aufbringen solcher Hochtemperaturschutzschichten stellt hohe Anforderungen bei der Fertigung, weil die Beschichtungen regelmäßig einen keramischen Aufbau haben, der einerseits porös und gleichzeitig spröde ist.

Die Anbindung von Hochtemperaturschutzschichten an die entsprechenden Bauteile wird häufig durch die Verwendung von so genannten Haftvermittlerschichten verbessert. Dadurch entstehen Mehrschichtsysteme, die gute mechanische Eigenschaften mit chemischer und thermischer Stabilität kombinieren.

Haftvermittlerschichten zeigen in der Regel eine besondere Oberflächenstruktur, die eine hervorragende Anbindung der eigentlichen Funktionsschicht (Wärmedämmung, Korrosionsschutz, Erosionsschutz etc.) an das zu schützende Bauteil ermöglicht. Da die Funktionsschicht meist porös ist, kommt der Haftvermittlerschicht auch eine Schutzfunktion für das Substrat (Bauteil) gegen aggressive Atmosphären beim Hochtemperaturbetrieb zu. Typischerweise werden dabei an der Grenzfläche beständige, schützende Oxidschichten, zum Beispiel Al₂O₃, Cr₂O₃ oder SiO₂ ausgebildet, die regelmäßig einen weiteren Oxidationsangriff verlangsamen und als thermisch gewachsene Oxide (TGO) bezeichnet werden.

Nach Erreichen einer so genannten kritischen Oxidschichtdicke, die sich üblicherweise nach einer kritischen Anzahl von Temperaturwechselbeanspruchungen ausbildet, kommt es jedoch durch thermische Spannung, Erosion und/oder Korrosion häufig zur Rissbildung, insbesondere an oder direkt über der Grenzfläche zwischen der schützenden Oxidschicht der Haftvermittlerschicht und der Hochtemperaturschutzschicht. Dies führt neben anderen Einflüssen dann in Folge regelmäßig zum Versagen der Hochtemperaturschutzschichten. Dieser Effekt des Verlustes der Beschichtung wird auch Spallation genannt. Die thermisch gewachsenen Oxide erreichen dabei typischerweise Schichtdicken zwischen 1 bis 10 µm, selten auch darüber, bevor es zu einem Abplatzen kommt.

Zur langfristigen Gewährleistung einer Schutzfunktion muss insofern ein genügend großes Reservoir an Elementen in der Haftvermittlerschicht vorhanden sein, die eine Oxidschicht auszubilden vermögen, das bedeutet, dass insbesondere eine Mindestschichtdicke für eine solche Haftvermittlerschicht erforderlich ist. Bekannte Haftvermittlerschichten weisen typischerweise eine Schichtdicke zwischen 50 und 200 µm auf.

In der Vergangenheit wurden bereits Ansätze zur Verbesserung der Lebensdauer von Wärmedämmschichten vorgeschlagen.

Beispielsweise ist aus einem gemeinsamen HIPERCOAT-Projekt von EU und USA ein Wärmedämmschichtsystem für den Einsatz für Gasturbinentriebwerke bekannt, bei dem zwischen dem Material der Wärmedämmschicht und dem thermisch gewachsenen Oxid (TGO) der Haftvermittlerschicht zusätzlich eine 50 µm dicke Isolierschicht aus Yttriumstabilisiertem Zirkoniumdioxid (YSZ) verwendet wurde, welche durch Verfahren wie Plasmaspritzen und Elektronenstrahlbedampfung (electron beam physical vapour deposition, EBPVD) aufgetragen werden kann.

Ein weiterer Ansatz sieht den Einsatz einer zweischichtigen Haftvermittlerschicht vor. Quadakkers et al. [1] schlägt beispielsweise dazu vor, auf einem Substrat eine erste Schicht über Hochgeschwindigkeitsflammspritzen (high velocity oxy-fuel, HVOF) herzustellen, und auf dieser eine zweite, dünnere Schicht (Flashcoat) aus demselben Material über atmosphärisches Plasmasprayen (air or atmospheric plasma spraying, APS) aufzubringen. Die obere Flashcoatschicht weist eine größere Rauigkeit als die erste Haftvermittlerschicht auf und führt - verglichen mit der ersten Schicht - zu einer 2- bis 3-fach längeren Lebensdauer. Das Verhältnis der Schichtdicken der oberen zur unteren Haftvermittlerschichten liegt dabei in der Regel zwischen 1:5 und 1:3.

Auch aus EP 1076727 B1 ist eine zweischichtige Haftvermittlerschicht bekannt, bei der eine erste Schicht aus einem ersten Material mit einer maximalen Größe von 55 µm über Hochgeschwindigkeitsflammspritzen (high velocity oxy-fuel, HVOF) auf einem Superlegierungssubstrat aufgebracht, und auf dieser eine zweite Schicht aus einem zweiten Material mit einer Größe zwischen 35 und 110 µm über atmosphärisches Plasmasprayen (air or atmospheric plasma spraying, APS) aufgebracht wird. Jeweils nach der Aufbringung erfolgt eine thermische Behandlung zur Verdichtung der Schichten. Das erste und das zweite Material können dasselbe Material umfassen, insbesondere MCrAl oder MCrAlY mit M = Eisen, Nickel und/oder Kobalt sowie Mischungen daraus.

Eine zweischichtige Haftvermittlerschicht ist darüber hinaus auch aus US 8497028 B1 bekannt. Dies umfasst eine erste, auf einem Substrat angeordnete oxidationsbeständige Schicht und eine zweite, darauf angeordnete spallationsbeständige Schicht. Die oxidationsbeständige Schicht kann ein MCrAlY aufweisen, beispielsweise ein MCrAlY umfassend 20 - 24 Gew.-% Kobalt, 14 - 18 Gew.-% Chrom, 11 - 13,5 Gew.-% Aluminium, 0,1 - 0,4 Gew.-% Hafnium, 0,4 - 0,8 Yttrium, 0,4 - 0,7 Gew.-% Silizium und Rest Nickel. Die spallationsbeständige Schicht ist insbesondere zur Ausbildung einer thermisch gewachsenen Oxidschicht geeignet und weist beispielsweise die Zusammensetzung aus 10 - 13 Gew.-% Kobalt, 5,5 - 7,0 Gew.-% Chrom, 3,0 - 6,0 Gew.-% Tantal, 3,0 - 5,0 Gew.-% Wolfram, 1,1 - 1,7 Gew.-% Molybdän, 9,0 - 11 Gew.-% Aluminium, 0,2 - 0,6 Gew.-% Hafnium, 0,3 - 0,7 Gew.-% Yttrium, 0,1 - 0,3 Gew.-% Silizium, 0,1 - 0,2 Gew.-% Zirkonium und Rest Nickel auf. Alternativ kann die spallationsbeständige Schicht beispielsweise auch die Zusammensetzung aus 11 - 14 Gew.-% Kobalt, 11 - 14 Gew.-% Chrom, 7,5 - 9,5 Gew.-% Aluminium, 0,1 - 0,5 Gew.-% Hafnium, 0,2 - 0,6 Gew.-% Yttrium, 0,1 - 0,3 Gew.-% Silizium, 0,1 - 0, 2 Gew.-% Zirkonium und Rest Nickel aufweisen.

Der Einsatz von Haftvermittlerschichten umfassend Oxid-dispersionsverfestigte Superlegierungen (oxide dispersion-strengthened, ODS) wurde ebenfalls bereits diskutiert. Solche Werkstoffe werden zum Beispiel für die temperaturmäßig höchst belasteten Schaufeln von Gasturbinen verwendet. Häufig eingesetzte ODS-Werkstoffe sind insbesondere Nickel-Legierungen. Für bestimmte Anwendungen werden aber auch Eisen-Aluminium-Legierungen oder Edelmetall-Legierungen als ODS-Materialien eingesetzt.

Als ODS-Legierungen werden durch Oxide teilchenverstärkte, pulvermetallisch hergestellte Legierungen bezeichnet, die häufig zur Erhöhung des Kriechwiderstandes von hochtemperaturbelasteten Bauteilen eingesetzt werden. ODS-Legierungen bestehen im Wesentlichen aus einem metallischen Grundwerkstoff, in der Regel aus einer metallischen Hochtemperaturlegierung, beispielsweise einer Eisen-Aluminiumlegierung, einer Eisen-Chromlegierung, einer Eisen-Chrom-Aluminiumlegierung, einer Nickel-Chromlegierung oder einem Nickel-Aluminat. Darin sind hoch stabile Oxide, wie das Yttriumoxid (Y₂O₃) oder Aluminiumoxid (Al₂O₃), atomar fein verteilt eingebaut. Die Oxidteilchen weisen dabei regelmäßig eine Größe zwischen 5 und 50 nm auf. Die Herstellung von ODS-Legierungen erfolgt in der Regel über mechanisches Legieren der entsprechenden Pulver in einer Kugelmühle.

Seiler et al. [2] untersuchten typische Wärmedämmschichtsysteme, umfassend jeweils eine Haftvermittlerschicht, eine Wärmedämmschicht (TBC) als eigentliche Funktionsschicht, sowie eine thermisch gewachsene Oxidschicht (TGO) zwischen der Haftvermittlerschicht und der Funktionsschicht. Dabei stellte sich heraus, dass die Lebensdauer des Beschichtungssystems nicht nur von der Sintereigenschaft der Funktionsschicht, der Wachstumsrate der thermisch gewachsenen Oxidschicht, der Rauigkeit an der Grenzfläche und den thermischen Ausdehnungskoeffizienten der beteiligten Schichten sondern auch von der Kriecheigenschaft der Haftvermittlerschicht abhängt. Es wurde als Ergebnis festgehalten, dass eine Haftvermittlerschicht mit langsamen Kriecheigenschaften (hohe Kriechbeständigkeit), wie sie durch OSD-Legierungen bewirkt, werden, einerseits die Lebensdauer verkürzen, anderseits aber auch die Spannungen innerhalb der Wärmedämmschicht verringern kann.

US7172820B2 offenbart eine verstärkte Haftschicht zur Verbesserung der Haftung einer Wärmedämmschicht auf einem darunter liegenden Metallsubstrat, um Abplatzungen zu verhindern, ohne die Oxidationsbeständigkeit der Haftschicht zu beeinträchtigen. Die Haftvermittlungsschicht umfasst ein Haftvermittlungsmaterial, das aus der Gruppe ausgewählt ist, die aus Überzugslegierungsbeschichtungsmaterialien, Aluminiddiffusionsbeschichtungsmaterialien und Kombinationen davon besteht. Teilchen, die eine im wesentlichen unlösliche, die Haftschicht verfestigende Verbindung umfassen und eine relativ feine Teilchengröße von etwa 2 Mikrometern oder weniger aufweisen, sind zumindest im oberen Teil der Haftschicht in einer Menge dispergiert, die ausreicht, um der Haftschicht eine Verfestigung zu verleihen und somit ihr Ratschen oder Rumpeln zu begrenzen. Übersetzt mit www.DeepL.com/Translator (kostenlose Version)

### Aufgabe und Lösung

Die Aufgabe der Erfindung ist es, ein neues, kostengünstiges Schutzschichtsystem für temperaturbelastete Bauteile bereit zu stellen, welches eine besonders gute Anbindung an ein Bauteil und zudem eine längere Lebensdauer als bislang bekannt sicherstellt.

Die Aufgabe der Erfindung wird gelöst durch eine neue Haftvermittlerschicht für die Anbindung einer Hochtemperaturschutzschicht mit den Merkmalen des Hauptanspruchs, durch ein Hochtemperatur-Schutzschichtsystem gemäß erstem Nebenanspruch sowie durch ein Verfahren zur Herstellung einer solchen Haftvermittlerschicht mit den Merkmalen gemäß weiterem Nebenanspruch.

Vorteilhafte Ausgestaltungen der neuen Haftvermittlerschicht, des Hochtemperatur-Schutzschichtsystems und des Herstellungsverfahrens finden sich in den jeweils darauf rückbezogenen Ansprüchen.

### Gegenstand der Erfindung

Im Rahmen der Erfindung wurde herausgefunden, dass die Nachteile des bisherigen Standes der Technik zum Thema Haftvermittlerschicht für Hochtemperaturschutz- oder Funktionsschichten durch eine neue, zweischichtige Haftvermittlerschicht überwunden werden kann. Grundgedanke dabei ist, dass die neue Haftvermittlerschicht aus einer ersten, dickeren Haftvermittlerschicht als Reservoir für die Ausbildung einer Oxidschicht und für die Anordnung auf einem Substrat vorgesehen, und einer zweiten, vorteilhaft dünneren Haftvermittlerschicht aufgebaut ist, die auf der ersten Schicht angeordnet ist, und die eine andere Zusammensetzung als die erste Schicht aufweist.

Es hat sich gezeigt, dass die Güte der thermisch gewachsenen Oxidationsschicht (TGO) einer Haftvermittlerschicht sowie das Verhalten der Grenzschicht zwischen der Funktionsschicht und der TGO-Schicht primär durch die oberste Lage der Haftvermittlerschicht bestimmt werden, die in Kontakt mit der Funktionsschicht steht. Hier setzt die Erfindung an.

Die untere, erste Schicht der nicht erfindungsgemäßen Haftvermittlerschicht, die für die Anbindung an ein Substrat vorgesehen ist, weist ein typisches Haftvermittlermaterial auf, beispielsweise das bislang bekannte MCrAlY-Material mit Kobalt, Nickel und/oder Eisen als Metall M. Geeignete Materialien für die erste Schicht sind z. B. NiCoCrAlY-Materialien, wie beispielsweise Co27Cr9Al0,5Y, Ni30Cr11Al0,5Y, Co32Ni21Cr8Al0,5Y, Ni23Co18Cr12,5Al0,5Y oder auch Ni20Co18Cr12,5Al0,6Y.

Die obere, zweite Schicht, der nicht erfindungsgemäßen Haftvermittlerschicht, die für die Anbindung einer Hochtemperaturschutzschicht vorgesehen ist, weist demgegenüber einen besonders oxidations- und zudem kriechbeständigen Werkstoff, d. h. einen Werkstoff mit langsamen Kriechraten, auf. Insbesondere sind hierfür oxiddispersionsverstärkte (ODS)-Legierungen aus beispielsweise MCrAl- oder MCrAlY-Material mit Kobalt, Nickel und/oder Eisen als Metall M geeignet. Als stabile feinverteilte Oxiddispersionen kommen dabei insbesondere Yttrium-, Aluminium-, Zirkonium- oder Hafniumoxid oder auch Seltenerdoxide in Betracht. Die Oxid-Dispersionen können zuvor durch mechanisches Legieren, beispielsweise über einen Hochenergie-Attritor, in die Matrixlegierung eingebracht werden.

Diese für die zweite Haftvermittlerschicht eingesetzten ODS-Werkstoffe haben regelmäßig einen positiven Einfluss auf die Wachstumsrate der thermisch gewachsenen Oxidschicht (TGO), d. h. die Wachstumsrate wird beispielsweise deutlich verringert, was regelmäßig zu einer längeren Lebensdauer der Haftvermittlerschicht bis zur Ausbildung von Rissen führt.

Die zweite Schicht sollte dazu Oxid-Dispersionen mit einem Gew.-Anteil von wenigstens 0,01 Gew.-% bis maximal 50 Gew.-% aufweisen, vorzugsweise mit einem Anteil von 0,1 bis 5 Gew.-%

Wird eine solche Haftvermittlerschicht in einem System Bauteil/Haftvermittlerschicht/Hochtemperaturschutzschicht eingesetzt, führt dies regelmäßig auch zu einer längeren Lebensdauer der aufgebrachten Hochtemperaturschutzschicht bis zum Abplatzen und damit zu einer verlängerten Lebensdauer des zu schützenden Bauteils.

Zudem beeinflusst die Haftvermittlerschicht auch den Spannungszustand sowohl in der Haftvermittlerschicht selbst als auch in der Hochtemperaturschutzschicht regelmäßig günstig. Durch den Einsatz der zweischichtigen Haftvermittlerschicht kann ein System Bauteil/Haftvermittlerschicht/Hochtemperaturschutzschicht somit deutlich verbessert werden.

Die erfindungsgemäße zweischichtige Haftvermittlerschicht wird bei Schutzschichten für keramische Faserverbundwerkstoffe eingesetzt.

Als keramische, nichtoxidische Substrate (Faserverbundwerkstoffe) werden insbesondere C/C, C/SiC, SiC/C-SiC oder SiC/SiC eingesetzt, wobei üblicherweise diese Verbundkeramiken in der Form "Fasertyp/Matrixtyp" abgekürzt werden. So steht "C/C" für Kohlenstofffaserverstärkter Kohlenstoff oder "C/SiC" für Kohlenstofffaser-verstärktes Siliciumcarbid. Bei keramischen Faserverbundwerkstoffen wird häufig Si als Haftvermittlerwerkstoff eingesetzt.

Die erfindungsgemäße Haftvermittlerschicht umfasst dabei eine auf dem Substrat angeordnete erste, thermisch gespritzte Haftvermittlerschicht umfassend Si oder Si Legierungen, wie beispielsweise MoSi₂, also typischerweise SiO₂ Bildner.

Das für die erste Schicht eingesetzte Haftvermittlermaterial für keramische Faserverbundwerkstoffe wird durch Oxiddispersionen ebenfalls in seinen Eigenschaften verbessert werden und als zweite, dünne, thermisch gespritzte Lage aus einem ODS-Werkstoff (Si-Legierung) auf der ersten Schicht angeordnet.

Auch hierfür können Yttrium-, Aluminium-, Zirkonium- oder Hafniumoxid oder auch Seltenerdoxide als stabile feinverteilte Oxid-dispersionen eingesetzt werden.

Als eigentliche Schutzschicht für einen keramischen Faserverbundwerkstoff kommen insbesondere thermisch gespritzte Schutzschicht-Toplagen aus korrosionsbeständigen Werkstoffen, z. B. Seltenerdsilikate, wie Yb₂Si₂O₇ in Betracht.

Die verwendeten ODS-Werkstoffe für die zweite, obere Haftvermittlerschicht sind in der Regel teurer als die Haftvermittlerwerkstoffe, die für die untere, erste Schicht eingesetzt werden.

In einer vorteilhaften Ausgestaltung der Erfindung wird daher vorgeschlagen, bei der erfindungsgemäßen Haftvermittlerschicht eine Kombination aus einer ersten, dickeren Schicht als Reservoirschicht und eine zweite, dünnere Schicht vorzusehen, welche dadurch vorteilhaft sehr kosteneffizient ist.

Vorzugsweise ist die obere, zweite Schicht mit dem ODS-Werkstoff nur halb so dick wie die untere, erste Schicht. In einer besonderen Ausführung der Erfindung weist die obere, zweite Schicht mit dem ODS-Werkstoff nur 30 % der Schichtdicke der unteren, ersten Schicht auf, vorzugsweise sogar nur 20 % oder weniger der Schichtdicke der unteren, ersten Schicht.

Die erfindungsgemäße zweischichtige Haftvermittlerschicht weist insgesamt eine Schichtdicke zwischen 50 und 300 µm, vorzugsweise zwischen 100 und 200 µm auf. Dabei sollte die zweite Schicht mit dem ODS-Material mindestens eine Schichtdicke von 10 µm aufweisen.

Als Aufbringungsmethoden zur Aufbringung der ersten Haftvermittlerschicht auf z. B. einem Bauteil, sind insbesondere thermische Spritzverfahren geeignet, wie Hochgeschwindigkeit-, Sauerstoff- oder Luft-Flammspritzen (HVOF, engl. High-Velocity-Oxygen-Fuel, oder HVAF, High-Velocity-Air-Fuel), Vakuum Plasmaspritzen (engl. Vacuum Plasma Spray), Kaltgasspritzen oder Atmosphärisches Plasmaspritzen (engl. atmospheric Plasma Spraying).

Als Aufbringungsmethoden zur Aufbringung der zweiten, oberen Haftvermittlerschicht auf der ersten Haftvermittlerschicht sind ebenfalls alle gängigen Verfahren geeignet, wie beispielsweise das Hochgeschwindigkeit-Flammspritzen (HVOF, engl. High-Velocity-Oxygen-Fuel, oder HVAF, High-Velocity-Air-Fuel), Vakuum Plasmaspritzen (engl. Vacuum Plasma Spray), Kaltgasspritzen oder Atmosphärisches Plasmaspritzen (engl. atmospheric Plasma Spraying).

Im Allgemeinen können bei der Aufbringung der zweiten, oberen Haftvermittlerschicht dieselben Verfahren eingesetzt werden, wie bei der ersten Schicht. Aufgrund der höheren Kriechfestigkeit können jedoch Verfahren mit einer höheren kinetischen Energie, wie beispielsweise Kaltgas, HVOF, bzw. HOAF-spritzen von Vorteil sein.

Zusammenfassend stellt die Erfindung eine verbesserte Haftvermittlerschicht bereit, bei der eine erste Haftvermittlerschicht aus einem ersten Material hergestellt wird, dieses Haftvermittlermaterial insbesondere durch Einbringung von Oxiddispersionen, verstärkt und verbessert wird, und dieser verbesserte Werkstoff als dünne zweite Schicht zusätzlich auf die zuvor abgeschiedenen, erste Haftvermittlerschicht aufgebracht wird.

Somit können die erste und die zweite Haftvermittlerschicht im Prinzip dasselbe Grundmaterial aufweisen, wobei allerdings im Material für die zweite Schicht zusätzlich stabile Oxide wie z. B. Yttrium- oder Zirkonium-Oxid, atomar feinst verteilt als Oxiddispersionen eingebaut sind, und dieses Material somit als eine ODS-Schicht vorliegt. Dies ist insbesondere von Vorteil, da es die Interdiffusion verlangsamt. So ist erfindungsgemäß eine erste Schicht umfassend reines Si mit einer zweiten Schicht umfassend ein ODS-MoSi₂ Material möglich.

Als Hochtemperaturschutzschichten, die vorteilhaft über die erfindungsgemäße Haftvermittlerschicht auf keramischen Bauteilen angebunden werden können, sind insbesondere Wärmedämmschichten (TBC) und umweltstabile (Thermal-) Schutzschichten (ETBC, engl. environmental and thermal barrier coating) zu nennen.

### Spezieller Beschreibungsteil

Im Folgenden werden zwei typische Ausführungen und ein konkretes Ausführungsbeispiel der Erfindung auch durch Figuren und Tabellen näher erläutert, ohne dass dadurch der breite Schutzbereich der Erfindung eingeschränkt werden soll.

### 1. nicht erfindungsgemäß Ausführung

Ein Wärmedämmschichtsystem umfassend
- eine Superlegierung als Substrat (Bauteil),
- darauf angeordnet eine erfindungsgemäße zweischichtige Haftvermittlerschicht,
- sowie eine auf der Haftvermittlerschicht optional angeordnete eigentliche Funktionsschicht. Als Substrate kommen Nickel-basierte Legierungen zum Einsatz. Die erfindungsgemäße Haftvermittlerschicht umfasst dabei eine auf dem Substrat angeordnete erste, thermisch gespritzte Ni23Co18Cr12Al0,5Y-Schicht als Haftvermittlerschicht, die über das Verfahren

Vakuum Plasmaspritzen (engl. Vacuum Plasma Spray) aufgebracht wird, und eine darauf angeordnete zweite, dünnere, ebenfalls thermisch gespritzte ODS-MCrAlY-Schicht mit 1 Gew.-% Al₂O₃-Dispersionen. Die Oxid-Dispersionen wurden zuvor durch mechanisches Legieren in das vorgenannte MCrAlY-Material, wie es für die erste Schicht verwendet wurde, eingebracht. Die ODS-MCrAlY-Schicht wird ebenfalls über Verfahren das VPS-Verfahren aufgebracht. Als Funktionsschicht, die ggfs. auch mehrlagig ausgeführt sein kann, kommen beispielsweise eine Wärmedämmschicht (WDS), eine Korrosionsschutzschicht oder eine umgebungsstabile (Thermal-) Schutzschicht (ETBC) in Frage.

### 2. Ausführung

Ein keramischer Verbundwerkstoff umfassend:
- ein insbesondere nichtoxidisches Substrat,
- darauf angeordnet eine erfindungsgemäße zweischichtige Haftvermittlerschicht,
- sowie eine optional auf der Haftvermittlerschicht angeordnete eigentliche Funktionsschicht.

Als keramische, nichtoxidische Substrate können dabei insbesondere C/C, C/SiC, SiC/C-SiC, SiC/SiC oder (nicht erfindungsgemäß)

Al₂O₃/Al₂O₃ eingesetzt werden, wobei üblicherweise diese Verbundkeramiken in der Form "Fasertyp/Matrixtyp" abgekürzt werden.

Die darauf angeordnete Haftvermittlerschicht umfasst dabei eine auf dem Substrat angeordnete erste, thermisch gespritzte Haftvermittlerschicht umfassend reines Si, sowie eine darauf angeordnete zweite, dünne, thermisch gespritzte Lage aus einem ODS-Werkstoff, hier Si mit 1 Gew.-% Y₂O₃.

Als Schutzschicht für den keramischen Faserverbundwerkstoff kommen insbesondere thermisch gespritzte Schutzschicht-Toplagen aus korrosionsbeständigen Werkstoffen (Seltenerdsilikate, wie Yb₂Si₂O₇ ) in Betracht.

Die Schichtdicke der ersten Haftvermittlerschicht hierbei beträgt ca. 50 µm und die Schichtdicke der zweiten ODS-verstärkten Schicht ca. 20 µm. Die darauf angeordnete Hochtemperaturschutzschicht umfassend Yb₂Si₂O₇ weist eine Schichtdicke von ca. 200 µm auf.

### 3. nicht erfindungsgemäß Ausführungsbeispiel

Nachfolgend wird der Verfahrensablauf für die Herstellung eines TBC-System mit einer oxiddispersionsverstärkten zweiten Haftvermittlerschicht beschrieben.

Als Ausgangspulver für die erste Haftvermittlerschicht (1. HVS) wurde Amdry 9954 (Co 32Ni 21Cr 8Al 0,5Y), -63 +11 µm, Sulzer Metco, Wohlen, Schweiz) verwendet.

Für die zweite Haftvermittlerschicht (2. HVS) kam ein oxiddispersionsverstärktes (ODS) Pulver zum Einsatz. Dieses wurde mit der Hochenergiekugelmühle Simoloyer CMO1 (Zoz GmbH, Wenden, Germany) hergestellt, indem Amdry 995C (Co 32Ni 21Cr 8Al 0.5Y, -90 +45 µm, Sulzer Metco, Wohlen, Schweiz) mit 2 Gew.-% α-Al₂O₃ (Martoxid MR70, Martinswerk, Bergheim, Germany), gemischt, gemahlen und schließlich mechanisch legiert.

Zur Kontrolle des Mahlprozesses wurden 0,5 Gew.-% des Mahlhilfsmittels Stearinsäure (Ligacid 10-12, C₁₈H₃₆O₂, Peter Greven GmbH & Co. KG, Bad Münstereifel, Germany) hinzugefügt. Als Kugel zu Pulver-Verhältnis wurde 10:1 gewählt und der Mahlvorgang bei 1400 rpm in einer gekühlten Mahlkammer mit 0,5 I Füllvolumen in Argonatmosphäre durchgeführt.

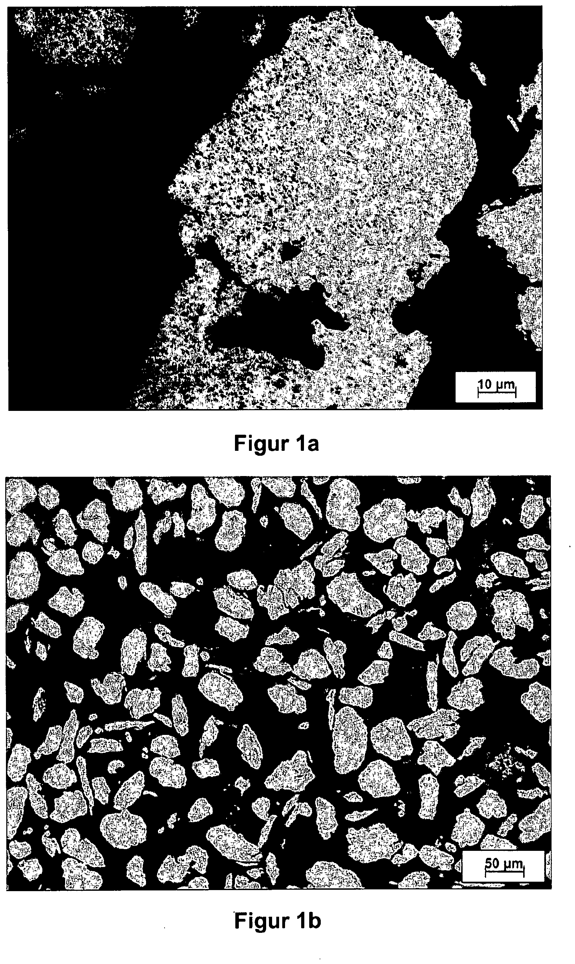

Der Vorgang wurde über 6 h durchgeführt, bis die Oxiddispersionen homogen in der metallischen Matrix verteilt waren und die Partikel eine irreguläre Morphologie aufwiesen. In der Figur 1 sind die Lichtmikroskopischen Aufnahmen des Querschliffs des ODS-Pulvers (a) im Maßstab 10 µm und (b) 50 µm mit eingebetteten Oxiddispersionen dargestellt. In Figur 1 (a) stellen die schwarzen Punkte in dem grauen Gebilde die fein verteilten Oxiddispersionen dar, während die Figur 1 (b) die irreguläre Morphologie des ODS-Pulvers wiederspiegelt.

Im Anschluss wurde das ODS-Pulver auf einen Größenbereich < 56 µm gesiebt. Die Applikation der ersten Haftvermittlerschicht und der zweiten Haftvermittlerschicht erfolgte jeweils über Vakuum Plasmaspritzen (VPS) auf einem Inconel IN 738 Substrat.

Als Wärmedämmschicht (WDS) wurde 8 YSZ über Atmosphärisches Plasmaspritzen (APS) aufgetragen.

Die Parameter des Vakuum Plasmaspritzens und des thermischen Spritzverfahrens sind in den folgenden Tabellen aufgeführt:

**Tabelle 1: Parameter der VPS-Spritzläufe**

| | 1. HVS | 2. HVS mit ODS |
|---|---|---|
| Stromstärke / A | 640 | 680 |
| Hydrogen / NLPM | 9 | 9 |
| Argon / NLPM | 50 | 50 |
| Spritzdistanz / mm | 275 | 275 |
| Roboter Geschwindigkeit / mm/s | 440 | 440 |
| Übergänge | 4 | 2 |
| Zuführscheibe Rotationsrate / % | 15 | 15 |
| Rührer / % | 30 | 30 |

**Tabelle 2: Parameter der APS-Spritzläufe**

| | WDS |
|---|---|
| Stromstärke / A | 420 |
| Helium / NLPM | 4 |
| Argon / NLPM | 46 |
| Spritzdistanz / mm | 200 |
| Roboter Geschwindigkeit / mm/s | 500 |
| Übergänge | 10 |
| Zuführscheibe Rotationsrate / % | 25 |
| Rührer / % | 30 |

Im Anschluss an die Applikation wurden die Proben nach den folgenden Parametern wärmebehandelt.

**Tabelle 3: Parameter der Wärmebehandlung:**

| Schritt | Temperatur [°C] | Zeit [h] |
|---|---|---|
| 1 | 1120 | 2 |
| 2 | 845 | 24 |

Nach der Wärmebehandlung wurde die Probe in Gradientests bis zum Versagen zyklisch einer Temperatur von 1400 °C ausgesetzt (Temperatur der ersten Haftvermittlerschicht ca. 1100 °C) und hierbei alle 300 s für 120 s auf Raumtemperatur gekühlt.

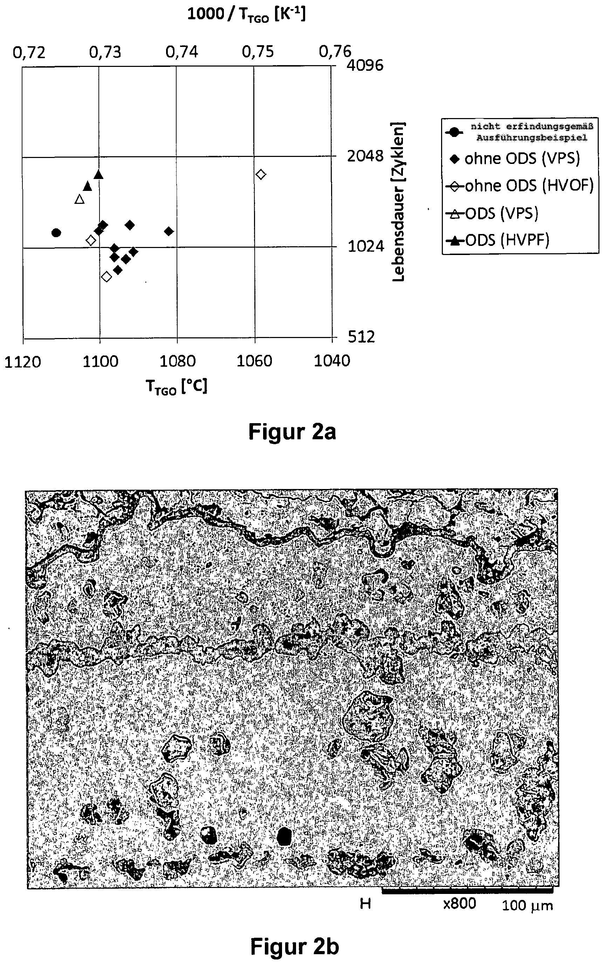

Wie in den Diagramm der Figur 2 (a) dargestellt ist, weist die Probe gemäß dem nicht erfindungsgemäß Ausfüh-

rungsbeispiel mit einer zweiten ODS-Haftvermittlerschicht mit 1445 Zyklen eine verlängerte Lebensdauer auf im Vergleich zu Wärmedämmschichtsystemen ohne eine ODS-Haftvermittlerschicht und vergleichbar mit Wärmedämmschichtsystemen mit reinen OPS-Haftvermittlerschichten. Die Proben ohne eine ODS-Haftvermittlerschicht weisen dabei eine typische Haftvermittlerschicht aus MCrAlY auf und wurden sowohl über VPS als auch über HVOF aufgebracht. Auch bei den Proben mit einer reinen ODS-Haftvermittlerschicht wurden diese sowohl über VPS als auch über HVOF appliziert.

Die Mikrostruktur des Wärmedämmschichtsystems gemäß dem nicht erfindungsgemäß Ausführungsbeispiel, zu sehen in Figur 2 (b), zeigt neben der ersten und zweiten Haftvermittlerschicht darüber hinaus, dass auch nach den Oxidationsversuchen noch β-Phase in der ersten Haftvermittlerschicht vorhanden war, die als Reservoir für die Ausbildung der thermisch gewachsenen Oxidschicht (TGO) dient.

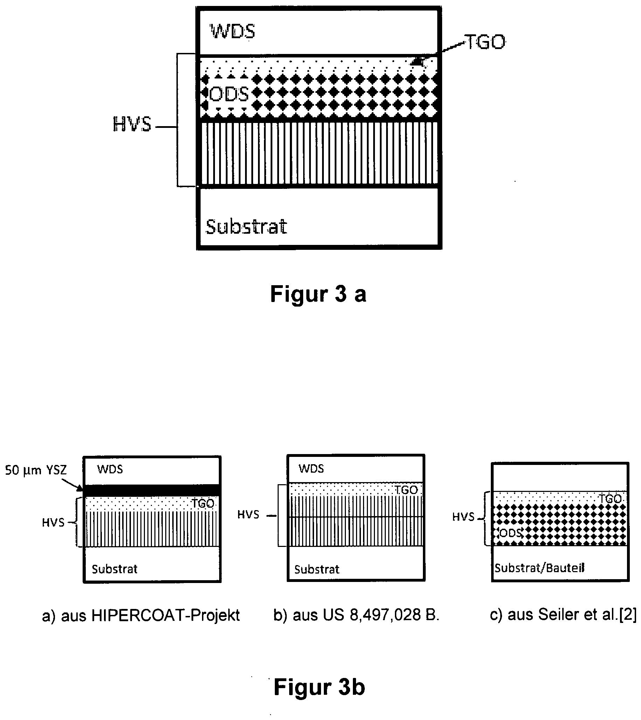

In der Figur 3 ist der prinzipielle Aufbau der Haftvermittlerschicht im Vergleich zum bisherigen Stand der Technik angegeben.

### In dieser Anmeldung zitierte Literatur:

[1] W.J. Quadakkers, D. Naumeko, P. Mor, W. Nowak, and L. Singheiser, "Effect of bondcoat roughness on lifetime of APS-TBC-systems in dry and wet gases" in "Thermal Barrier Coatings IV", U. Schulz, German Aerospace Center; M. Maloney, Pratt & Whitney; R. Darolia, GE Aviation (retired) Eds, ECI Symposium Series, (2015).
[2] P. Seiler, M. Bäker, and J. Rösler, "Variation of Creep Properties and interfacial Roughness in Thermal Barrier Coating Systems", Advanced Ceramic Coatings and Materials for Extreme Environments (35th International Conference and Exposition on Advanced Ceramics and Composites/ ICACC'11), Daytona Beach, 32:129-136, 2011, DOI: 10.1002/9781118095232.ch11

## Patentansprüche

1. Schichtsystem umfassend eine Haftvermittlerschicht zur Anbindung einer Hochtemperatur-Schutzschicht auf einem Substrat, sowie ein Substrat, **gekennzeichnet durch**
- ein Substrat umfassend eine keramischen Verbundwerkstoff umfassend C/C, C/SiC, SiC/C-SiC oder SiC/SiC,
- eine erste Schicht aus einem ersten Haftvermittlermaterial, die auf dem Substrat angeordnet ist,
- sowie eine auf der ersten Schicht angeordnete zweite Schicht, umfassend ein zweites Haftvermittlermaterial mit zusätzlich eingebrachten Oxiddispersionen, die für die Anbindung einer Hochtemperatur-Schutzschicht vorgesehen ist,
***dadurch** gekennzeichnet,*
dass das erste und/oder zweite Haftvermittlermaterial Si oder eine Si-Legierung umfasst.

2. Schichtsystem nach Anspruch 1,
bei dem die zweite Schicht Oxiddispersionen in einem Anteil von 0,01 bis 50 Gew.-% aufweist, insbesondere einen Anteil von 0,1 bis 5 Gew.-% aufweist.

3. Schichtsystem nach einem der Ansprüche 1 bis 2,
bei dem das erste und zweite Haftvermittlermaterial identisch sind.

4. Schichtsystem nach einem der Ansprüche 1 bis 3,
bei dem die zweite Schicht Yttrium-, Aluminium-, Zirkonium-, Hafnium- oder auch Seltenerdoxiddispersionen umfasst.

5. Schichtsystem nach einem der Ansprüche 1 bis 4,
bei dem die erste Schicht dicker als die zweite Schicht ist, insbesondere die erste Schicht mindestens doppelt so dick wie die zweite Schicht ist.

6. Schichtsystem nach einem der Ansprüche 1 bis 5,
mit einer Gesamtschichtdicke zwischen 50 und 300 µm, vorzugsweise zwischen 100 und 200 µm, wobei die zweite Schicht eine Schichtdicke von wenigstens 50 µm aufweist.

7. Schichtsystem umfassend ein Substrat, eine darauf angeordnete Haftvermittlerschicht nach einem der Ansprüche 1 bis 6, sowie eine darauf angeordnete Hochtemperaturschutzschicht.

8. Verfahren zur Herstellung einer Haftvermittlerschicht zur Anbindung einer Hochtemperaturschutzschicht auf einem Substrat umfassend eine keramischen Verbundwerkstoff umfassend C/C, C/SiC, SiC/C-SiC oder SiC/SiC mit den Schritten
- auf das Substrat, wird eine erste Schicht umfassend ein erstes Haftvermittlermaterial aufgebracht,
- auf die erste Schicht wird eine zweite Schicht umfassend ein zweites Haftvermittlermaterial mit zusätzlich eingebrachten Oxiddispersionen aufgebracht,
***dadurch gekennzeichnet,***
**dass** als erstes und/oder zweites Haftvermittlermaterial entweder Si oder eine Si-Legierung eingesetzt werden.

9. Verfahren nach Anspruch 8,
bei dem als Material für die ODS-Legierung das erste Haftvermittlermaterial mit zusätzlich eingebrachten stabilen Oxiddispersionen eingesetzt wird.

10. Verfahren nach Anspruch 8 oder 9,
bei dem für die zweite Schicht Haftvermittlermaterial mit stabilen Oxiddispersionen mit einem Anteil von 0,01 bis 50 Gew.-%, insbesondere mit einem Anteil von 0,1 bis 5 Gew.-% eingesetzt wird.

11. Verfahren nach einem der Ansprüche 8 bis 10,
bei dem als zusätzliche stabile Oxiddispersionen Yttrium-, Aluminium-, Zirkonium-, Hafnium- oder auch Seltenerdoxide eingesetzt werden.

12. Verfahren nach einem der Ansprüche 8 bis 11,
bei dem wenigstens eine der Schichten über Hochgeschwindigkeit-Flammspritzen, Vakuum Plasmaspritzen, Kaltgasspritzen oder Atmosphärisches Plasmaspritzen aufgebracht wird.

## Claims

1. A layer system comprising an adhesion promoter layer for joining a high-temperature protective layer to a substrate, as well as a substrate, **characterized by**
- a substrate comprising a ceramic composite comprising C/C, C/SiC, SiC/C-SiC or SiC/SiC,
- a first layer of a first adhesion promoter material arranged on the substrate,
- as well as a second layer arranged on the first layer, comprising a second adhesion promoter material with additionally introduced oxide dispersions, which is provided for joining a high-temperature protective layer, ***characterized in that***
the first and/or second adhesion promoter material comprises Si or an Si alloy.

2. The layer system of claim 1, wherein the second layer has oxide dispersions amounting to 0.01 to 50% by weight, in particular 0.1 to 5% by weight.

3. The layer system according to any one of claims 1 to 2, wherein the first and second adhesion promoter materials are identical.

4. The layer system according to any one of claims 1 to 3, wherein the second layer comprises yttrium, aluminum, zirconium, hafnium or rare earth oxide dispersions.

5. The layer system according to any one of claims 1 to 4, wherein the first layer is thicker than the second layer, in particular is the first layer at least twice as thick as the second layer.

6. The layer system according to any one of claims 1 to 5 with a total layer thickness of between 50 and 300 um, preferably between 100 and 200 um, wherein the second layer has a layer thickness of at least 50 µm.

7. A layer system comprising a substrate, an adhesion promoter layer according to one of Claims 1 to 6 arranged thereon, as well as a high-temperature protective layer arranged thereon.

8. A method of producing an adhesion promoter layer for joining a high-temperature protective layer to a substrate comprising a ceramic composite comprising C/C, C/SiC, SiC/C-SiC or SiC/SiC, with the steps of
- applying, on the substrate, a first layer comprising a first adhesion promoter material,
- applying, on the first layer, a second layer comprising a second adhesion promoter material with additionally introduced oxide dispersions, ***characterized in that***
either Si or an Si alloy is used as the first and/or second adhesion promoter material.

9. The method according to claim 8, wherein the first adhesion promoter material with additionally introduced stable oxide dispersions is used as material for the ODS alloy.

10. The method according to Claim 8 or 9, wherein adhesion promoter material with stable oxide dispersions amounting to 0.01 to 50% by weight, in particular 0.1 to 5% by weight, is used for the second layer.

11. The method according to any one of claims 8 to 10, wherein yttrium, aluminum, zirconium, hafnium or also rare earth oxides are used as additional stable oxide dispersions.

12. The method according to any of claims 8 to 11, wherein at least one of the layers is applied by means of high-speed flame spraying, vacuum plasma spraying, cold gas spraying or atmospheric plasma spraying.

## Revendications

1. Système de couches comprenant une couche d'adhésif destinée à se lier à une couche de protection à haute température sur un substrat, ainsi qu'un substrat,
**caractérisé par**
- un substrat comprenant un matériau composite céramique comprenant C/C, C/SiC, SiC/C-SiC ou SiC/SiC,
- une première couche en une première matière adhésive, qui est mise sur le substrat,
- ainsi qu'une deuxième couche, mise sur la première couche, comprenant une deuxième matière adhésive ayant des dispersions d'oxyde, qui y sont introduites supplémentairement, qui est prévue pour se lier à une couche de protection à haute température, **caractérisé en ce que**
la première et/ou la deuxième matière adhésive comprenne du Si ou un alliage de Si.

2. Système de couches suivant la revendication 1,
dans lequel la deuxième couche a des dispersions d'oxyde en une proportion de 0,01 à 50 % en poids, en particulier en une proportion de 0,1 à 5 % en poids.

3. Système de couches suivant l'une des revendications 1 à 2, dans lequel la première et la deuxième matière adhésive sont les mêmes.

4. Système de couches suivant l'une des revendications 1 à 3, dans lequel la deuxième couche comprend des dispersions d'oxyde d'yttrium, d'aluminium, de zirconium, d'hafnium ou également de terres rares.

5. Système de couches suivant l'une des revendications 1 à 4, dans lequel la première couche est plus épaisse que la deuxième couche, en particulier la première couche est au moins deux fois aussi épaisse que la deuxième couche.

6. Système de couches suivant l'une des revendications 1 à 5, ayant une épaisseur totale de couche comprise entre 50 et 300 µm, de préférence entre 100 et 200 µm, la deuxième couche ayant une épaisseur de couche d'au moins 50 µm.

7. Système de couches comprenant un substrat sur lequel est mis une couche d'adhésif suivant l'une des revendications 1 à 6, ainsi que sur laquelle est mise une couche de protection à haute température.

8. Procédé de production d'une couche adhésive destinée à se lier à une couche de protection à haute température sur un substrat comprenant un matériau composite céramique comprenant C/C, C/SiC, SiC/C-SiC ou SiC/SiC comprenant les stades
- on dépose sur le substrat une première couche comprenant une première matière adhésive,
- on dépose sur la première couche une deuxième couche comprenant une deuxième matière adhésive ayant des dispersions d'oxyde, qui y sont introduites supplémentairement,
**caractérisé**
**en ce qu'**on utilise comme première et/ou comme deuxième matière adhésive, soit Si soit un alliage de Si.

9. Procédé suivant la revendication 8, dans lequel on utilise comme matière pour l'alliage ODS la première matière adhésive ayant des dispersions d'oxyde stables, qui sont introduites supplémentairement.

10. Procédé suivant la revendication 8 ou 9, dans lequel on utilise pour la deuxième couche de la matière adhésive ayant des dispersions d'oxyde stables en une proportion de 0,01 à 50 % en poids, en particulier en une proportion de 0,1 à 5 % en poids.

11. Procédé suivant l'une des revendications 8 à 10, dans lequel on utilise comme dispersions d'oxyde stables supplémentaires des oxydes d'yttrium, d'aluminium, de zirconium, d'hafnium ou également de terres rares.

12. Procédé suivant l'une des revendications 8 à 11, dans lequel on dépose au moins l'une des couches par pulvérisation à la flamme à grande vitesse, pulvérisation au plasma sous vide, pulvérisation au gaz froid ou pulvérisation au plasma atmosphérique.
